# DEMANDE DE BREVET EUROPEEN

(11) **EP 4 521 172 A1**
(43) Date de publication de la demande: **12.03.2025**
(21) Numéro de dépôt: 23195657.4
(22) Date de dépôt: 06.09.2023
(51) Int. Cl.: G04B 17/06, G04D 3/00, G04B 1/14, F16F 1/10

(54) **OUTILLAGE ET PROCÉDÉ DE SÉPARATION DE RESSORTS SPIRAUX APRÈS ESTRAPADAGE ET TRAITEMENT THERMIQUE**

(71) Demandeur: Nivarox-FAR S.A., 2400 Le Locle (CH)
(72) Inventeur: Mallet, Daniel, 25500 Le Bélieu (FR); MICHELET, Lionel, 1450 Sainte-Croix (CH); VERARDO, Marco, 2336 Les Bois (CH)
(74) Mandataire: ICB SA

(57) **Abrégé**

Un aspect de l'invention concerne un outillage (100) de séparation d'une plaque (123) de ressorts spiraux (1, 2, 3) après estrapadage, comportant des surfaces de roulement inférieure et supérieure (4 ; 5) sensiblement parallèles mobiles l'une par rapport à l'autre, verticalement ou longitudinalement, pour déformer ladite plaque (123) par ovalisation, et la soumettre à un mouvement de roulement entre lesdites surfaces de roulement (4 ; 5), et un procédé de séparation de ressorts spiraux (1, 2, 3) depuis une plaque (123) avec cet outillage (100) pour réaliser son écrasement mécanique dans le domaine élastique et commander des séquences de compression et de roulement de la plaque (123).

## Description

### Domaine technique de l'invention

L'invention concerne un outillage de séparation d'une plaque sensiblement cylindrique ou annulaire de ressorts spiraux après estrapadage et traitement thermique, ledit outillage étant agencé pour amorcer ou réaliser la séparation desdits spiraux.

L'invention concerne encore un procédé de séparation de ressorts spiraux depuis une plaque après estrapadage et traitement thermique.

L'invention concerne le domaine de la fabrication des ressorts spiraux d'horlogerie, en particulier des ressorts-spiraux d'oscillateurs.

### Arrière-plan technologique

Les ressorts spiraux des oscillateurs sont formés en estrapadant (enroulant) entre 3 et 6 lames métalliques pour former une plaque de spiraux; ce faisant, on obtient une spirale d'Archimède avec un pas régulier entre chaque tour. Les plaques sont ensuite traitées thermiquement (fixées) pour qu'elles conservent cette forme de spirale. Cette méthode génère une grande surface de contact entre les lames métalliques de petites dimensions, et l'étape qui consiste à séparer les spiraux entre eux peut se révéler compliquée: on dit alors que les spiraux « collent ». Ce problème est particulièrement présent quand le matériau des ressorts spiraux est un alliage à base de titane, alors que des spiraux en matériau acier ne présentent généralement pas de problème de séparation.

Une méthode traditionnelle pour séparer les spiraux consiste à les placer dans une petite boîte en carton, et à taper cette boîte à la main sur une surface rigide. Une méthode similaire mais plus industrielle consiste à utiliser une machine à taper, qui génère des chocs répétés sur les spiraux au moyen d'une came et de ressorts.

Une solution alternative consiste à générer chimiquement une couche d'un composé particulier pour diminuer drastiquement les collements entre les lames et permettre une bonne séparation. Cette méthode limite toutefois la possibilité de corriger le coefficient thermique du spiral.

### Résumé de l'invention

L'invention se propose de développer une autre méthode de séparation des spiraux, basée sur un écrasement mécanique des spiraux avant leur passage dans la machine à taper.

A cet effet, l'invention concerne un outillage de séparation d'une plaque sensiblement cylindrique ou annulaire de ressorts spiraux après estrapadage et traitement thermique, ledit outillage étant agencé pour amorcer ou réaliser la séparation desdits spiraux.

Selon l'invention, ledit outillage comporte une première surface de roulement inférieure et une deuxième surface de roulement supérieure parallèles ou sensiblement parallèles l'une à l'autre et à un plan de base, et mobiles l'une par rapport à l'autre, d'une part dans une direction longitudinale parallèle audit plan de base, et d'autre part dans une direction verticale perpendiculaire audit plan de base, et agencées pour serrer ladite plaque entre une génératrice inférieure et une génératrice supérieure sous l'action d'au moins un actionneur agencé pour rapprocher l'une de l'autre ladite première surface de roulement inférieure et ladite deuxième surface de roulement supérieure pour déformer ladite plaque par ovalisation, et pour soumettre une surface périphérique sensiblement cylindrique de ladite plaque à un mouvement de roulement entre ladite première surface de roulement inférieure et ladite deuxième surface de roulement supérieure sous l'action d'au moins un actionneur agencé pour imprimer un mouvement relatif selon ladite direction longitudinale entre ladite première surface de roulement inférieure et ladite deuxième surface de roulement supérieure.

Un autre aspect de l'invention concerne un procédé de séparation de ressorts spiraux depuis une plaque après estrapadage et traitement thermique.

Selon l'invention, on se munit d'un tel outillage pour réaliser un écrasement mécanique de ladite plaque dans le domaine élastique, on détermine des valeurs minimale et maximale de taux d'écrasement d'une surface périphérique sensiblement cylindrique de ladite plaque, on soumet ladite plaque à au moins une dite séquence de roulement dans une position comprimée, on détermine des valeurs minimale et maximale de rotation par séquence, on détermine des valeurs minimale et maximale de rotation cumulée pour un ensemble de séquences dont on détermine le nombre, on met en position une dite plaque entre ladite première surface de roulement inférieure et ladite deuxième surface de roulement supérieure dudit outillage, par l'action d'un opérateur ou d'un manipulateur robotisé, et on exécute successivement, pour chaque dite séquence, une première étape de mise en compression de ladite plaque par une course verticale prédéterminée, une deuxième étape de mouvement relatif entre ladite première surface de roulement inférieure et ladite deuxième surface de roulement supérieure selon une course longitudinale prédéterminée, une troisième étape de dégagement relatif entre ladite première surface de roulement inférieure et ladite deuxième surface de roulement supérieure vers une position d'écartement dans laquelle ladite plaque n'est soumis à aucune contrainte de compression.

### Brève description des figures

Les buts, avantages et caractéristiques de l'invention apparaîtront mieux à la lecture de la description détaillée qui va suivre, en référence aux dessins annexés, où :

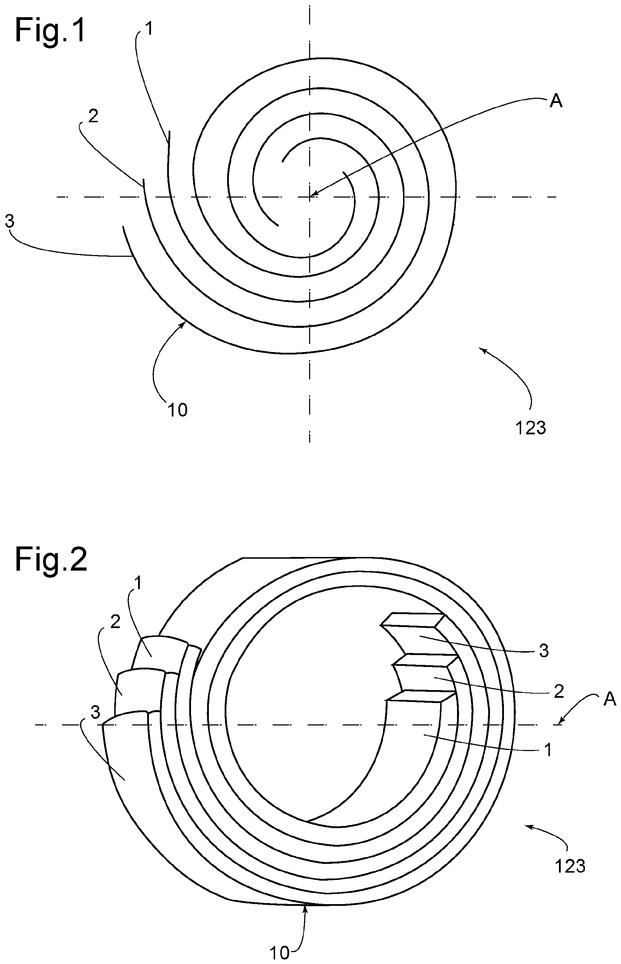

- la figure 1 illustre, de façon schématisée et en vue de côté, une plaque de spiraux comportant, après estrapadage et traitement thermique , plusieurs spiraux enroulés l'un sur l'autre et décalés selon leur longueur ;
- la figure 2 illustre, de façon schématisée et perspective, la plaque de spiraux de la figure 1 ;

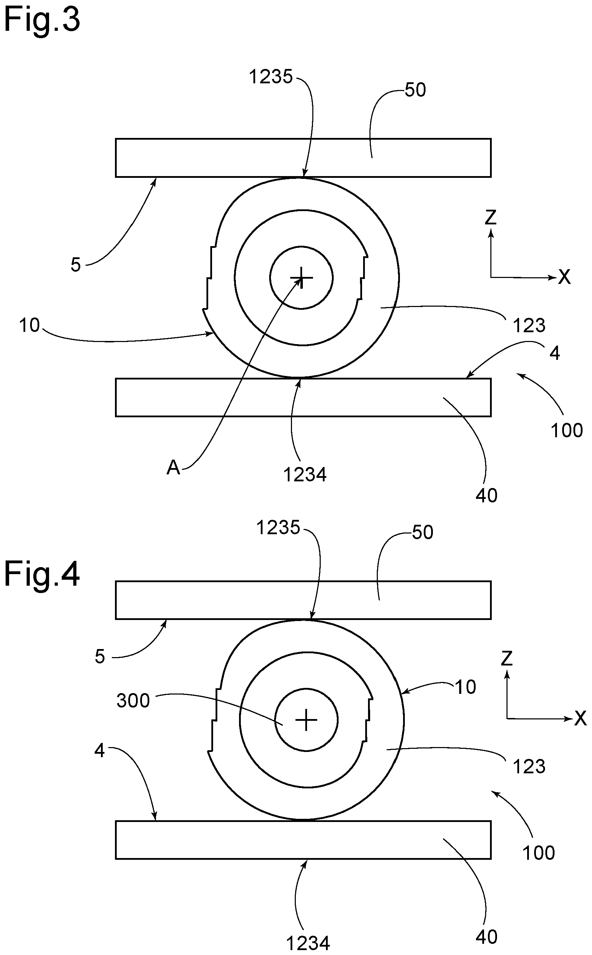

- la figure 3 illustre, de façon schématisée et en vue de côté, un outillage selon l'invention, comportant une surface de roulement supérieure et une surface de roulement inférieure toutes deux en appui sur la tranche de la plaque de spiraux de la figure 1, respectivement selon une génératrice supérieure et une génératrice inférieure de cette plaque;
- la figure 4 illustre, de façon schématisée et similaire à la figure 3, le même outillage qui comporte un mandrin pour limiter le mouvement radial de la plaque ;

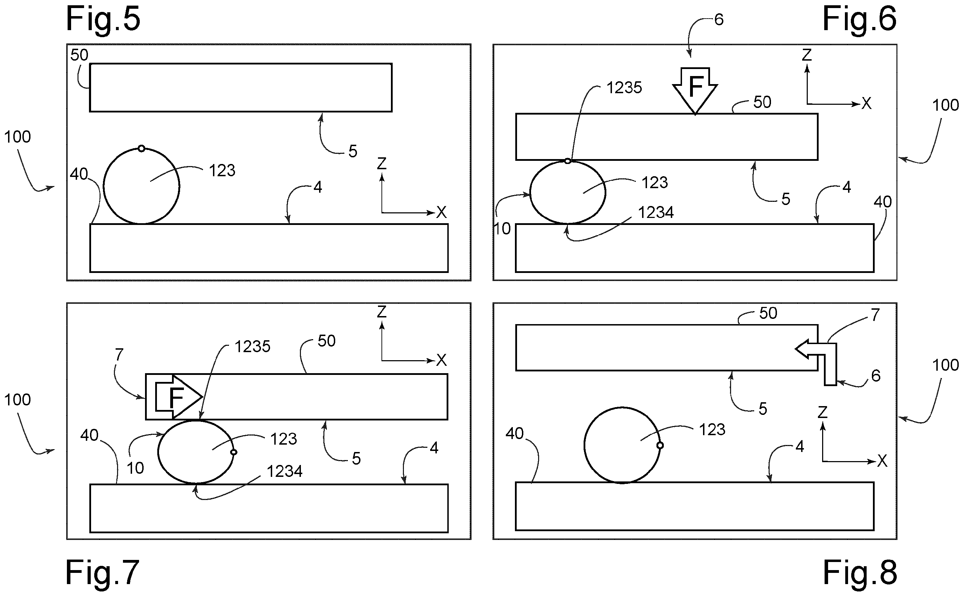

- la figure 5 illustre, de façon schématisée et similaire à la figure 3, le même outillage, où la plaque est posée sur chant sur la surface de roulement inférieure, et où la surface de roulement supérieure est dégagée à distance de la plaque;
- la figure 6 illustre, de façon schématisée et similaire à la figure 5, le même outillage, où la surface de roulement supérieure est rapprochée de la surface de roulement inférieure, et en appui de compression sur la plaque qui est ovalisée du fait de la compression;
- la figure 7 illustre, de façon schématisée et similaire à la figure 6, le même outillage, où la surface de roulement supérieure et la surface de roulement inférieure sont en mouvement relatif longitudinal l'une par rapport à l'autre, toujours en appui de compression sur la plaque qui est ovalisée du fait de la compression;
- la figure 8 illustre, de façon schématisée et similaire à la figure 7, le même outillage, où la surface de roulement supérieure est dégagée par rapport à la plaque qui retrouve sa forme sensiblement cylindrique;

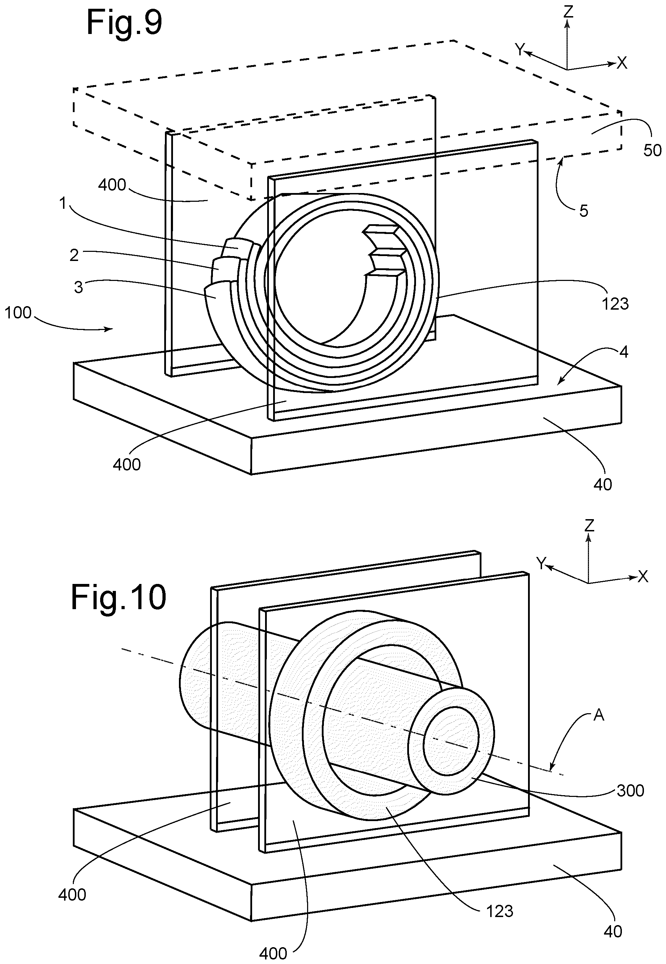

- la figure 9 illustre, de façon schématisée et en perspective, le même outillage qui comporte deux plaques latérales de part et d'autre de la plaque pour limiter son ébat transversal ;
- la figure 10 illustre, de façon schématisée et similaire à la figure 9, le même outillage, comportant un mandrin similaire à celui de la figure 4, guidé par rapport aux plaques latérales.

### Description détaillée de l'invention

L'invention porte sur un processus d'écrasement mécanique dans le domaine élastique de plaques de spiraux estrapadés et fixés, qui permet d'améliorer significativement le taux de séparation des spiraux.

Les figures illustrent une application particulière et nullement limitative de l'invention à une plaque de spiraux 123, l'invention concernant la séparation des ressorts 1, 2, 3, constituant cette plaque de spiraux 123. Cet exemple de trois spiraux est purement didactique, et on comprend que l'invention est applicable à toute plaque de spiraux usuelle.

Le roulage par écrasement consiste à soumettre les plaques de spiraux, directement après fixage, à une contrainte mécanique qui va les déformer élastiquement, afin d'aider au décollement des lames des spiraux entre elles et faciliter le processus de séparation. Il est donc important de noter que ce roulage n'est pas à proprement parler une méthode de séparation, mais c'est une étape préliminaire qui permet, si elle est réalisée correctement, de diminuer significativement le taux de rebut lors de la séparation.

La plaque de spiraux estrapadés et fixés est placée verticalement selon une direction verticale Z, c'est-à-dire sur chant, sur un support horizontal dans un plan XY. Un outillage 100 comporte un actionneur mécanique qui vient ensuite écraser la plaque par un déplacement dans la direction verticale Z. Cette action génère une contrainte de compression aux pôles, et une contrainte en traction à l'équateur de la plaque de spiraux 123 ; c'est cette contrainte de traction qui est utilisée localement pour aider à décoller les lames de spiraux 1, 2, 3. Une fois la plaque de spiraux 123 écrasée, un actionneur mécanique, qui peut être le même que celui commandant l'écrasement, induit un déplacement latéral dans une direction longitudinale X ; ceci va mettre en rotation la plaque de spiraux 123 (d'où le terme de « roulage »), tout en conservant l'écrasement dans la direction verticale Z. On obtient ainsi une contrainte de traction qui va successivement affecter toutes les portions des lames, au fur et à mesure que la plaque de spiraux 123 roule. On observe également un glissement progressif des lames entre elles, contribuant également à l'effet de décollement. Une fois le déplacement longitudinal terminé, l'écrasement est levé et le spiral retrouve sa forme initiale. L'outillage commande alors un déplacement longitudinal inverse pour retrouver sa position initiale. On répète ce cycle plusieurs fois, afin de s'assurer que chaque portion de la plaque de spiraux a vu plusieurs phases de contraintes en traction.

Le processus de roulage par écrasement est réglé par plusieurs paramètres critiques.

Le taux d'écrasement est un paramètre clé, car il va déterminer l'intensité des contraintes de traction qui vont aider au décollement des lames. Cependant, il ne doit pas être trop important, pour éviter une déformation plastique de la plaque de spiraux 123. On le choisit de préférence dans la fourchette variant entre 1.5% et 5.6% du diamètre de la plaque de spiraux 123.

La longueur du déplacement longitudinal de l'actionneur permet de faire varier l'étendue de la zone où s'appliquent les contraintes de traction. Pour obtenir un roulage efficace, il est important que toutes les portions de la plaque de spiraux 123 aient été en traction à un moment donné. Typiquement, chaque cycle de déplacement latéral induit une rotation située entre 1/8 de tour et 1 tour complet de la plaque de spiraux.

Le nombre de cycles de roulement dépend à la fois du déplacement longitudinal de l'actionneur à chaque cycle et de la longueur de la base du dispositif de roulage. Il a été noté qu'un optimum existe car un nombre de roulages trop faible a un impact très limité sur l'amélioration du taux de séparation, tandis qu'un roulage trop fort va induire un blocage mécanique des lames qui deviendront alors inséparables. Le nombre de tours varie entre ½ et 100, de préférence entre 1 et 10, encore de préférence entre 2 et 4.

Les plaques de spiraux sont introduites de manière à ce qu'elles roulent dans le sens opposé à l'enroulement de la spirale d'Archimède, sinon les extrémités des lames en périphérie de la plaque de spiraux 123 peuvent s'accrocher sur la base et déformer plastiquement la spirale.

Dans la direction transversale Y, à savoir perpendiculairement au plan de roulage, on place avantageusement une plaque, notamment une vitre en plexiglas, qui a pour rôle de limiter le déplacement des plaques dans cette direction transversale Y, en donnant l'espacement nécessaire pour un roulage avec un minimum de frottements, et elle permet également de venir cheviller les lames entre elles à intervalle régulier.

Une fois les plaques de spiraux 123 passées dans l'outillage 100 selon l'invention constituant le dispositif de roulage, les processus de séparation standards (boîte en carton ou machine à taper) peuvent être appliqués avec succès.

Plus particulièrement, l'invention se base sur l'utilisation d'un outillage 100 de séparation d'une plaque 123 sensiblement cylindrique ou annulaire de ressorts spiraux 1, 2, 3, après estrapadage et traitement thermique. Cet outillage 100 est agencé pour amorcer ou réaliser la séparation des spiraux 1, 2, 3.

Selon l'invention, l'outillage 100 comporte une première surface de roulement inférieure 4 et une deuxième surface de roulement supérieure 5 parallèles ou sensiblement parallèles l'une à l'autre et à un plan de base XY, et mobiles l'une par rapport à l'autre, d'une part dans une direction longitudinale X parallèle au plan de base XY, et d'autre part dans une direction verticale Z perpendiculaire au plan de base XY.

Cette première surface de roulement inférieure 4 et cette deuxième surface de roulement supérieure 5 sont agencées pour serrer la plaque 123 entre une génératrice inférieure 1234 et une génératrice supérieure 1235 sous l'action d'au moins un actionneur 6, 7, agencé pour rapprocher l'une de l'autre la première surface de roulement inférieure 4 et la deuxième surface de roulement supérieure 5 pour déformer la plaque 123 par ovalisation.

Cette première surface de roulement inférieure 4 et cette deuxième surface de roulement supérieure 5 sont encore agencées pour soumettre une surface périphérique 10 sensiblement cylindrique de la plaque 123 à un mouvement de roulement entre la première surface de roulement inférieure 4 et la deuxième surface de roulement supérieure 5, sous l'action d'au moins un actionneur 6, 7, agencé pour imprimer un mouvement relatif selon la direction longitudinale X entre la première surface de roulement inférieure 4 et la deuxième surface de roulement supérieure 5.

Plus particulièrement, l'outillage 100 comporte des moyens de commande 200 qui sont agencés pour commander une course verticale, selon la direction verticale Z, de la première surface de roulement inférieure 4 par rapport à la deuxième surface de roulement supérieure 5 et pour commander une course longitudinale, selon la direction longitudinale X, de la première surface de roulement inférieure 4 par rapport à la deuxième surface de roulement supérieure 5.

Plus particulièrement, ces moyens de commande 200 sont agencés pour commander au moins une séquence comportant, après une mise en position de la plaque 123 entre la première surface de roulement inférieure 4 et la deuxième surface de roulement supérieure 5 par un opérateur ou un manipulateur robotisé, une première étape de mise en compression de la plaque 123 par une course verticale prédéterminée du premier actionneur 6, une deuxième étape de mouvement relatif entre la première surface de roulement inférieure 4 et la deuxième surface de roulement supérieure 5 selon une course longitudinale prédéterminée, une troisième étape de dégagement relatif entre la première surface de roulement inférieure 4 et la deuxième surface de roulement supérieure 5 vers une position d'écartement dans laquelle la plaque 123 n'est soumis à aucune contrainte de compression.

Plus particulièrement, la course verticale prédéterminée est comprise entre 1,5% et 5,6% du diamètre maximal de la surface périphérique 10 sensiblement cylindrique de la plaque 123.

Plus particulièrement, la course longitudinale prédéterminée est agencée pour imprimer à la plaque 123 une rotation comprise entre 1/8 tour et 1 tour.

Plus particulièrement, les moyens de commande 200 sont agencés pour commander, dans au moins une séquence, une quatrième étape de mouvement relatif retour entre la première surface de roulement inférieure 4 et la deuxième surface de roulement supérieure 5 pour les ramener dans la position relative qu'elles occupent l'une par rapport à l'autre dans la première étape.

Plus particulièrement, les moyens de commande 200 sont agencés pour commander une pluralité de telles séquences avec une rotation cumulée de la plaque 123 comprise entre 0,5 tour et 100 tours.

Plus particulièrement, les moyens de commande 200 sont agencés pour commander une pluralité de telles séquences avec une rotation cumulée de la plaque 123 comprise entre 1 tour et 10 tours.

Plus particulièrement, les moyens de commande 200 sont agencés pour commander une pluralité de telles séquences avec une rotation cumulée de la plaque 123 comprise entre 2 tour et 4 tours.

Plus particulièrement, l'outillage 100 comporte, transversalement selon une direction transversale Y perpendiculaire à la direction longitudinale X et à la direction verticale Z, au moins une plaque 400 comportant une surface plane de limitation de course transversale de la plaque 123. Plus particulièrement, l'outillage 100 comporte, transversalement et de part et d'autre de la plaque 123, deux telles plaques de limitation de course transversale de la plaque 123, dont au moins l'une est transparente.

Plus particulièrement, l'outillage 100 comporte un mandrin 300 insérable dans une dite plaque 123 et agencé pour limiter sa course pendant sa manipulation dans l'outillage 100. Plus particulièrement, le mandrin 300 est dimensionné, par rapport à une plaque 123 de géométrie donnée, avec un jeu radial qui est supérieur à la course verticale prédéterminée, qui est une course de compression maximale commandée par les moyens de commande 200. Plus particulièrement, ce mandrin 300 est guidé par des logements ou des tourillons que comportent deux telles plaques parallèles 400.

Plus particulièrement, la première surface de roulement inférieure 4 est une surface d'une plaque inférieure 40 rigide ou/et la deuxième surface de roulement supérieure 5 est une surface d'une plaque supérieure 50 rigide.

Dans une première variante, la première surface de roulement inférieure 4 ou/et la deuxième surface de roulement supérieure 5 est une surface plane.

Dans une deuxième variante, la première surface de roulement inférieure 4 ou/et la deuxième surface de roulement supérieure 5 comporte une ondulation. Plus particulièrement, cette ondulation est apériodique.

Dans une deuxième variante, la première surface de roulement inférieure 4 et la deuxième surface de roulement supérieure 5 sont orientables l'une par rapport à l'autre dans une position dans laquelle des plans qui leur sont tangents intérieurement, du côté de la plaque 123, sont inclinés l'un par rapport à l'autre selon un angle prédéterminé et de valeur inférieure à 5°.

Plus particulièrement, l'outillage 100 comporte un premier actionneur 6, qui est agencé pour rapprocher l'une de l'autre la première surface de roulement inférieure 4 et la deuxième surface de roulement supérieure 5 selon la direction verticale Z pour déformer la plaque 123 par ovalisation.

Plus particulièrement, l'outillage 100 comporte un deuxième actionneur 7, qui est agencé pour soumettre une surface périphérique 10 sensiblement cylindrique de la plaque 123 à un mouvement de roulement sur la première surface de roulement inférieure 4 et la deuxième surface de roulement supérieure 5. Plus particulièrement, le deuxième actionneur 7 est agencé pour commander un mouvement relatif selon la direction longitudinale X entre la première surface de roulement inférieure 4 et la deuxième surface de roulement supérieure 5.

Plus particulièrement, le deuxième actionneur 7 est confondu avec le premier actionneur 6 qui est le seul actionneur que comporte l'outillage 100, et qui comporte des moyens de commutation pour commander séparément un mouvement relatif entre la première surface de roulement inférieure 4 et la deuxième surface de roulement supérieure 5, selon la direction verticale Z ou selon la direction longitudinale X.

Plus particulièrement, les moyens de commande 200 sont automatisés.

Plus particulièrement, les moyens de commande 200 sont manuels.

L'invention concerne encore un procédé de séparation de ressorts spiraux 1, 2, 3, depuis une plaque 123 après estrapadage et traitement therm ique.

Selon l'invention, on se munit d'un tel outillage 100 pour réaliser un écrasement mécanique de la plaque 123 dans le domaine élastique, on détermine des valeurs minimale et maximale de taux d'écrasement d'une surface périphérique 10 sensiblement cylindrique de la plaque 123, on soumet la plaque 123 à au moins une séquence de roulement dans une position comprimée, on détermine des valeurs minimale et maximale de rotation par séquence, on détermine des valeurs minimale et maximale de rotation cumulée pour un ensemble de séquences dont on détermine le nombre, on met en position une plaque 123 entre la première surface de roulement inférieure 4 et la deuxième surface de roulement supérieure 5 de l'outillage 100, par l'action d'un opérateur ou d'un manipulateur robotisé, et on exécute successivement, pour chaque séquence, une première étape de mise en compression de la plaque 123 par une course verticale prédéterminée, une deuxième étape de mouvement relatif entre la première surface de roulement inférieure 4 et la deuxième surface de roulement supérieure 5 selon une course longitudinale prédéterminée, une troisième étape de dégagement relatif entre la première surface de roulement inférieure 4 et la deuxième surface de roulement supérieure 5 vers une position d'écartement dans laquelle la plaque 123 n'est soumis à aucune contrainte de compression.

Plus particulièrement, au cours des séquences, on effectue un écrasement radial des lames des ressorts 1, 2, 3, à intervalles réguliers. Dans une autre variante, on effectue un écrasement radial des lames des ressorts 1, 2, 3, à intervalles irréguliers entre la première surface de roulement inférieure 4 et la deuxième surface de roulement supérieure 5.

Plus particulièrement, après avoir procédé à une pluralité d'écrasements par roulage selon ce procédé, on procède à une séparation mécanique des ressorts 1, 2, 3, en plaçant la plaque 123 dans une boîte en carton qu'on soumet à des chocs sur une surface rigide, ou/et en soumettant la plaque 123 à une machine à taper générant des chocs répétés sur les ressorts spiraux 1, 2, 3, de la plaque 123.

En somme, la séparation est assistée par un écrasement par roulage effectué dans le domaine élastique du matériau, et ce procédé ne laisse aucune trace sur le spiral.

Ce processus de séparation des spiraux, base sur un écrasement par roulage, sur un outillage adapté, permet d'augmenter le taux de spiraux séparés de manière significative, pour des spiraux fabriqués en alliage de titane, et d'augmenter très sensiblement la proportion des spiraux bons pour le service.

## Revendications

1. Outillage (100) de séparation d'une plaque (123) sensiblement cylindrique ou annulaire de ressorts spiraux (1, 2, 3) après estrapadage et traitement thermique, ledit outillage (100) étant agencé pour amorcer ou réaliser la séparation desdits spiraux (1, 2, 3), **caractérisé en ce que** ledit outillage (100) comporte une première surface de roulement inférieure (4) et une deuxième surface de roulement supérieure (5) parallèles ou sensiblement parallèles l'une à l'autre et à un plan de base (XY), et mobiles l'une par rapport à l'autre, d'une part dans une direction longitudinale (X) parallèle audit plan de base (XY), et d'autre part dans une direction verticale (Z) perpendiculaire audit plan de base (XY), et agencées pour serrer ladite plaque (123) entre une génératrice inférieure (1234) et une génératrice supérieure (1235) sous l'action d'au moins un actionneur (6, 7) agencé pour rapprocher l'une de l'autre ladite première surface de roulement inférieure (4) et ladite deuxième surface de roulement supérieure (5) pour déformer ladite plaque (123) par ovalisation, et pour soumettre une surface périphérique (10) sensiblement cylindrique de ladite plaque (123) à un mouvement de roulement entre ladite première surface de roulement inférieure (4) et ladite deuxième surface de roulement supérieure (5) sous l'action d'au moins un actionneur (6, 7) agencé pour imprimer un mouvement relatif selon ladite direction longitudinale (X) entre ladite première surface de roulement inférieure (4) et ladite deuxième surface de roulement supérieure (5).

2. Outillage (100) selon la revendication 1, **caractérisé en ce que** ledit outillage (100) comporte des moyens de commande (200) agencés pour commander une course verticale, selon ladite direction verticale (Z), de ladite première surface de roulement inférieure (4) par rapport à ladite deuxième surface de roulement supérieure (5) et pour commander une course longitudinale, selon ladite direction longitudinale (X), de ladite première surface de roulement inférieure (4) par rapport à ladite deuxième surface de roulement supérieure (5).

3. Outillage (100) selon la revendication 2, **caractérisé en ce que** lesdits moyens de commande (200) sont agencés pour commander au moins une séquence comportant, après une mise en position de ladite plaque (123) entre ladite première surface de roulement inférieure (4) et ladite deuxième surface de roulement supérieure (5) par un opérateur ou un manipulateur robotisé, une première étape de mise en compression de ladite plaque (123) par une course verticale prédéterminée dudit premier actionneur (6), une deuxième étape de mouvement relatif entre ladite première surface de roulement inférieure (4) et ladite deuxième surface de roulement supérieure (5) selon une course longitudinale prédéterminée, une troisième étape de dégagement relatif entre ladite première surface de roulement inférieure (4) et ladite deuxième surface de roulement supérieure (5) vers une position d'écartement dans laquelle ladite plaque (123) n'est soumis à aucune contrainte de compression.

4. Outillage (100) selon la revendication 3, **caractérisé en ce que** ladite course verticale prédéterminée est comprise entre 1,5% et 5,6% du diamètre maximal de ladite surface périphérique (10) sensiblement cylindrique de ladite plaque (123).

5. Outillage (100) selon la revendication 3 ou 4, **caractérisé en ce que** ladite course longitudinale prédéterminée est agencée pour imprimer à ladite plaque (123) une rotation comprise entre 1/8 tour et 1 tour.

6. Outillage (100) selon l'une des revendications 3 à 5, **caractérisé en ce que** lesdits moyens de commande (200) sont agencés pour commander, dans ladite au moins une séquence, une quatrième étape de mouvement relatif retour entre ladite première surface de roulement inférieure (4) et ladite deuxième surface de roulement supérieure (5) pour les ramener dans la position relative qu'elles occupent l'une par rapport à l'autre dans ladite premier étape.

7. Outillage (100) selon l'une des revendications 3 à 6, **caractérisé en ce que** lesdits moyens de commande (200) sont agencés pour commander une pluralité de dites séquences avec une rotation cumulée de ladite plaque (123) comprise entre 0,5 tour et 100 tours.

8. Outillage (100) selon la revendication 7, **caractérisé en ce que** lesdits moyens de commande (200) sont agencés pour commander une pluralité de dites séquences avec une rotation cumulée de ladite plaque (123) comprise entre 1 tour et 10 tours.

9. Outillage (100) selon la revendication 8, **caractérisé en ce que** lesdits moyens de commande (200) sont agencés pour commander une pluralité de dites séquences avec une rotation cumulée de ladite plaque (123) comprise entre 2 tour et 4 tours.

10. Outillage (100) selon l'une des revendications 1 à 9, **caractérisé en ce que** ledit outillage (100) comporte, transversalement selon une direction transversale Y perpendiculaire à ladite direction longitudinale X et à ladite direction verticale Z, au moins une plaque (400) comportant une surface plane de limitation de course transversale de ladite plaque (123).

11. Outillage (100) selon la revendication 10, **caractérisé en ce que** ledit outillage (100) comporte, transversalement et de part et d'autre de ladite plaque (123), deux dites plaques de limitation de course transversale de ladite plaque (123), dont au moins l'une est transparente.

12. Outillage (100) selon l'une des revendications 1 à 11, **caractérisé en ce que** ledit outillage (100) comporte un mandrin (300) insérable dans une dite plaque (123) et agencé pour limiter sa course pendant sa manipulation dans ledit outillage (100).

13. Outillage (100) selon les revendications 3 et 12, **caractérisé en ce que** ledit mandrin (300) est dimensionné, par rapport à une dite plaque (123), avec un jeu radial qui est supérieur à ladite course verticale prédéterminée, qui est une course de compression maximale commandée par lesdits moyens de commande (200).

14. Outillage (100) selon l'une des revendications 1 à 13, **caractérisé en ce que** ladite première surface de roulement inférieure (4) est une surface d'une plaque inférieure (40) rigide ou/et ladite deuxième surface de roulement supérieure (5) est une surface d'une plaque supérieure (50) rigide.

15. Outillage (100) selon l'une des revendications 1 à 14, **caractérisé en ce que** ladite première surface de roulement inférieure (4) ou/et ladite deuxième surface de roulement supérieure (5) est une surface plane.

16. Outillage (100) selon l'une des revendications 1 à 14, **caractérisé en ce que** ladite première surface de roulement inférieure (4) ou/et ladite deuxième surface de roulement supérieure (5) comporte une ondulation.

17. Outillage (100) selon la revendication 16, **caractérisé en ce que** ladite ondulation est apériodique.

18. Outillage (100) selon l'une des revendications 1 à 17, **caractérisé en ce que** ladite première surface de roulement inférieure (4) et ladite deuxième surface de roulement supérieure (5) sont orientables l'une par rapport à l'autre dans une position dans laquelle des plans qui leur sont tangents, du côté de ladite plaque (123), sont inclinés l'un par rapport à l'autre selon un angle prédéterminé et de valeur inférieure à 5°.

19. Outillage (100) selon l'une des revendications 1 à 18, **caractérisé en ce que** ledit outillage (100) comporte un premier actionneur (6) agencé pour rapprocher l'une de l'autre ladite première surface de roulement inférieure (4) et ladite deuxième surface de roulement supérieure (5) selon ladite direction verticale (Z) pour déformer ladite plaque (123) par ovalisation.

20. Outillage (100) selon l'une des revendications 1 à 19, **caractérisé en ce que** ledit outillage (100) comporte un deuxième actionneur (7) agencé pour soumettre une surface périphérique (10) sensiblement cylindrique de ladite plaque (123) à un mouvement de roulement sur ladite première surface de roulement inférieure (4) et ladite deuxième surface de roulement supérieure (5).

21. Outillage (100) selon la revendication 20, **caractérisé en ce que** ledit deuxième actionneur (7) est agencé pour commander un mouvement relatif selon ladite direction longitudinale (X) entre ladite première surface de roulement inférieure (4) et ladite deuxième surface de roulement supérieure (5).

22. Outillage (100) selon la revendication 19 et selon la revendication 20 ou 21, **caractérisé en ce que** ledit deuxième actionneur (7) est confondu avec ledit premier actionneur (6) qui est le seul actionneur que comporte ledit outillage (100), et qui comporte des moyens de commutation pour commander séparément un mouvement relatif entre ladite première surface de roulement inférieure (4) et ladite deuxième surface de roulement supérieure (5), selon ladite direction verticale (Z) ou selon ladite direction longitudinale (X).

23. Outillage (100) selon la revendication 2 et l'une des revendications 1 à 22, **caractérisé en ce que** lesdits moyens de commande (200) sont automatisés.

24. Outillage (100) selon la revendication 2 et l'une des revendications 1 à 22, **caractérisé en ce que** lesdits moyens de commande (200) sont manuels.

25. Procédé de séparation de ressorts spiraux (1, 2, 3) depuis une plaque (123) après estrapadage et traitement thermique, **caractérisé en ce qu'**on se munit d'un outillage (100) selon l'une des revendications 1 à 21 pour réaliser un écrasement mécanique de ladite plaque (123) dans le domaine élastique, **en ce qu'**on détermine des valeurs minimale et maximale de taux d'écrasement d'une surface périphérique (10) sensiblement cylindrique de ladite plaque (123), **en ce qu'**on soumet ladite plaque (123) à au moins une dite séquence de roulement dans une position comprimée, **en ce qu'**on détermine des valeurs minimale et maximale de rotation par séquence, **en ce qu'**on détermine des valeurs minimale et maximale de rotation cumulée pour un ensemble de séquences dont on détermine le nombre, **en ce qu'**on met en position une dite plaque (123) entre ladite première surface de roulement inférieure (4) et ladite deuxième surface de roulement supérieure (5) dudit outillage (100), par l'action d'un opérateur ou d'un manipulateur robotisé, et **en ce qu'**on exécute successivement, pour chaque dite séquence, une première étape de mise en compression de ladite plaque (123) par une course verticale prédéterminée, une deuxième étape de mouvement relatif entre ladite première surface de roulement inférieure (4) et ladite deuxième surface de roulement supérieure (5) selon une course longitudinale prédéterminée, une troisième étape de dégagement relatif entre ladite première surface de roulement inférieure (4) et ladite deuxième surface de roulement supérieure (5) vers une position d'écartement dans laquelle ladite plaque (123) n'est soumis à aucune contrainte de compression.

26. Procédé selon la revendication 25, **caractérisé en ce que**, au cours desdites séquences, on effectue un écrasement radial des lames desdits ressorts (1, 2, 3) à intervalles réguliers entre ladite première surface de roulement inférieure (4) et ladite deuxième surface de roulement supérieure (5).

27. Procédé selon la revendication 25 ou 26, **caractérisé en ce que**, après avoir procédé à une pluralité d'écrasements par roulage selon ledit procédé, on procède à une séparation mécanique desdits ressorts (1, 2, 3) en plaçant ladite plaque (123) dans une boîte en carton qu'on soumet à des chocs sur une surface rigide, ou/et en soumettant ladite plaque (123) à une machine à taper générant des chocs répétés sur lesdits ressorts spiraux (1, 2, 3) de ladite plaque (123).
